Europäisches Patentamt

European Patent Office

Office européen des brevets

(19)

(11) Veröffentlichungsnummer: **0 191 338**
**B1**

(12) **EUROPÄISCHE PATENTSCHRIFT**

(45) Veröffentlichungstag der Patentschrift:
22.03.89

(51) Int. Cl.⁴: **B 01 F 15/06**

(21) Anmeldenummer: **86101000.7**

(22) Anmeldetag: **25.01.86**

(54) **Verfahren und Vorrichtung zur gesteuerten Zugabe von Farbkonzentraten in eine Schneckenmaschine.**

(30) Priorität: **14.02.85 DE 3505036**

(43) Veröffentlichungstag der Anmeldung:
**20.08.86 Patentblatt 86/34**

(45) Bekanntmachung des Hinweises auf die Patenterteilung:
**22.03.89 Patentblatt 89/12**

(84) Benannte Vertragsstaaten:
**CH DE FR GB IT LI**

(56) Entgegenhaltungen:
**FR-A- 2 275 296**
**US-A- 4 403 866**

(73) Patentinhaber: **Werner & Pfleiderer GmbH,
Theodorstrasse 10 Postfach 30 12 20,
D-7000 Stuttgart 30 (DE)**

(72) Erfinder: **Rudolph, Joachim, Ing. (grad.),
Keltenstrasse 46, D-7252 Weil der Stadt (DE)**

## Beschreibung

Die Erfindung betrifft ein Verfahren zur gesteuerten Zugabe von Farbkonzentraten in eine Schneckenmaschine gemäß dem Oberbegriff des Patentanspruches 1 sowie eine Vorrichtung zur Durchführung dieses Verfahrens gemäß dem Oberbegriff des Patentanspruches 2.

Aus der DE-AS 12 85 167 ist das gesteuerte Einbringen von Zusatzstoffen in ein Polymerisationsprodukt bekannt. Hierbei werden die Zusatzstoffe einem schmelz-flüssigen aus dem Polymerisationsprodukt gebildeten Hauptstrom über eine regelbare Dosiereinrichtung zugeführt, deren Regelgröße mittels Vorwähleinrichtung und/oder einer Standhöhen Meßeinrichtung proportional zum Produkthauptstrom veränderbar ist.

Die bekannte Vorgehensweise bzw. die Vorrichtungsausbildung ist darauf abgestellt, das Konzentrations- und Mengenverhältnis der Komponenten insgesamt einem durch das Produktionsverfahren zeitlich ungleichen Mengenanfall anzupassen. Da die den Steuerungsvorgang zur Dosierung der Zusatzstoffe bewirkenden Impulse von einer der zugeführten Komponenten, nämlich vom Produkthauptstrom ausgehen, ist eine solche Vorgehensweise bei genauer und in kleinsten Mengen erfolgenden Komponenten-Zugabe nicht geeignet.

Um den Farbstandard bei Aufbereitung und Extrusion eingefärbter Kunststoffe zu genügen, waren bisher aufwendige Maßnahmen erforderlich.

Die zunächst in den Eingabetrichter einer Schneckenmaschine z.B. über Bandwaagen getrennt eingespeisten Haupt- und Zusatzkomponenten wurden gemischt und extrudiert. Zur Feststellung von Farbabweichungen erfolgte die Herstellung eines Platten-Ausschnitts, um danach eine Rezepturänderung zu erarbeiten, welcher Vorgang mehrmals wiederholt wurde, bis das Extrudat dem gewünschten Farbstandard entsprach.

In der FR-A-2 275 296 ist ein Verfahren zum Extrudieren einer Kunststoffolie mit geringen Dickenschwankungen bekannt, bei dem unter Verwendung eines Extruders, einer Schmelzepumpe und eines Breitschlitzwerkzeuges die dem Extruder zugeführten Stoffe (Rohstoff und Rückgut) innerhalb eines geschlossenen Regelkreises mengenmäßig erfaßt und zur Bildung eines einheitlichen Mengenwertes miteinander verglichen werden, wobei der Füllgrad des Extruders über den Massedruck am Extruderausgang der Regelgröße zusätzlich konstant gehalten wird. Hierbei wird die bei den Dosierorganen und der Schmelzepumpe unterschiedliche Fördermenge so abgestimmt, daß ein gleichmäßiger Füllgrad des Extruders gewährleistet ist. Eine ausschließlich von einer als Farbintensität ermittelten Meß- und Regelgröße abhängige Steuerung sämtlicher Zugabestoffe erfolgt hierbei nicht.

Aus der US-A-4 403 866 ist ein Verfahren zur chargenweisen Herstellung von aus einer Mehrzahl Komponenten bestehender Flüssig-Farbe in einem Mischtank bekannt, wobei die Farbwerte einer Misch-Charge zur Bestimmung der Zusammensetzung aller weiteren Chargen mittels eines Colorimeters innerhalb einer Proben-Leitung ermittelt und zur Festlegung eines Vergleichswertes und des daraus abgeleiteten Signals zur Steuerung einer dosierten Komponenten-Zugabe einem Computer zum Vergleich mit festen Eingabewerden zugeleitet wird.

Die Umsetzung und Genauigkeit der ermittelten Werte ist durch die Ausleitung der Probe erheblich eingeschränkt, da sich diese während des Fördervorgangs in der Proben-Leitung leicht verändert und mit innerhalb einer Toleranzbreite festliegenden Werten verglichen wird, womit die Komponenten-Zugabe und das Mischergebnis nachteilig beeinflußt wird. Die bei diesem Verfahren je Rezeptur der Charge einmalig vorgesehene Farbwert-Ermittlung ist daher bei einer kontinuierlichen Herstellung von Fertigmischungen in Schneckenmaschinen mit durch die Aufbereitung bedingten Farbveränderungen nicht geeignet. Die bekannte Vorgehensweise ermöglicht nur bei relativ hoher Toleranzbreite in der Farbabweichung eine befriedigende Produktqualität.

Der Erfindung liegt somit die Aufgabe zugrunde, ein Verfahren zu bestimmen, mit welchem Abweichungen in der Farbintensität des Extrudates einer in einer Schneckenmaschine aufbereiteten Mischung sicher ausgeglichen werden können.

Bezüglich des Verfahrens ist diese Aufgabe durch die im Patentanspruch 1 angegebenen Merkmale gelöst. Während bisher selbst bei gleichem Farbkonzentrat und/oder Pigment trotz festgelegter und genau eingehaltener Rezeptur der Farbton jeder neuen Produktionscharge abwich, ist durch das erfindungsgemäße Verfahren erreicht, daß bei Verwendung eines Spektrometers unter periodischem Abruf eines Meßsignals eine laufende Überwachung und Korrektur der Rezeptur für die extrudierte Mischung erreicht ist. Dabei können bereits geringfügige Farbabweichungen im Extrudat ermittelt und zur Antriebsänderung der Dosiervorrichtung herangezogen werden, so daß stetig selbst kleinste Mengenveränderungen in der Farbstoffzugabe ermöglicht sind. Die mehrfache Herstellung von Proben und deren Auswertung zur Bestimmung einer Rezepturänderung entfällt.

Bezüglich der Vorrichtung ist die gestellte Aufgabe durch die im Patentanspruch 3 angegebenen Merkmale gelöst.

Die Anwendung des Spektrometers und dessen Anschluß unmittelbar im Austrittsbereich des Extruders bietet die Gewähr, daß der Veränderung einer vorgegebenen Rezeptur der tatsächlich wirksame Farbstoffgehalt des Extrudats zu Grunde gelegt ist.

Dies gelingt durch dichtes Heranführen der Meßsonde an das Mischgut in den Innenraum der Schneckenmaschine. Durch Anordnung des mit der Meßsonde innerhalb einer abgestuften Bohrung direkt verbundenen Glasstopfens werden weder das Mischgut noch die Misch- und Knetelemente beeinträchtigt. Auch ist ein Austritt des Mischgutes im Bereich der Meßstelle wirksam verhindert.

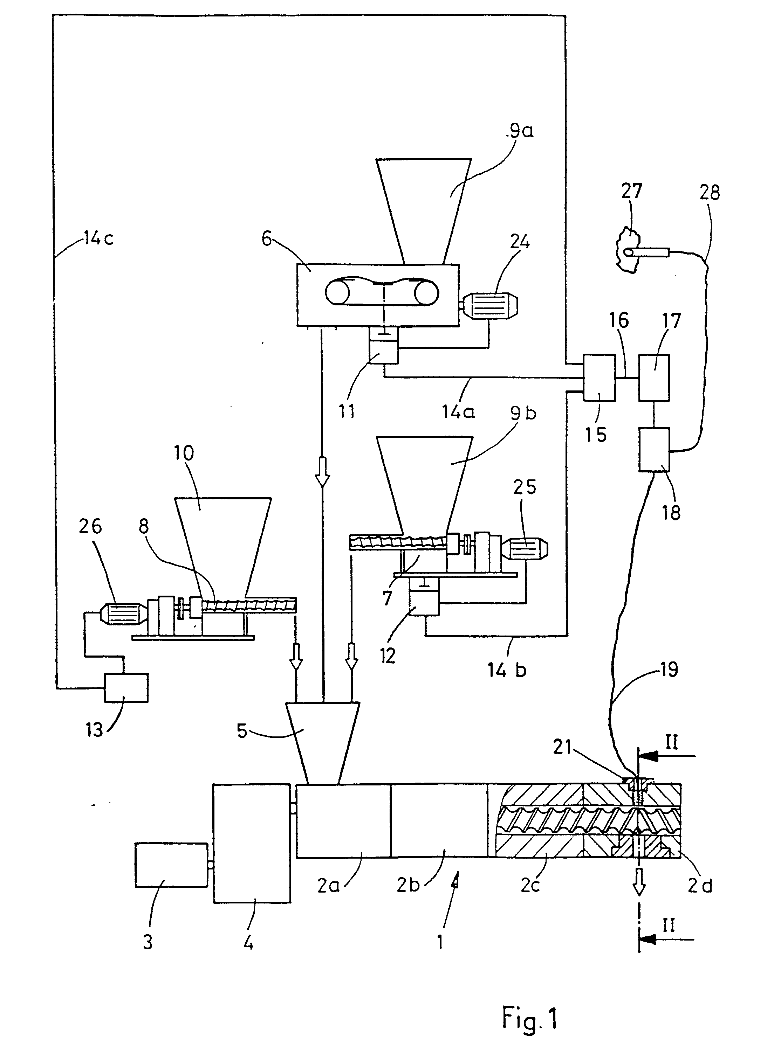

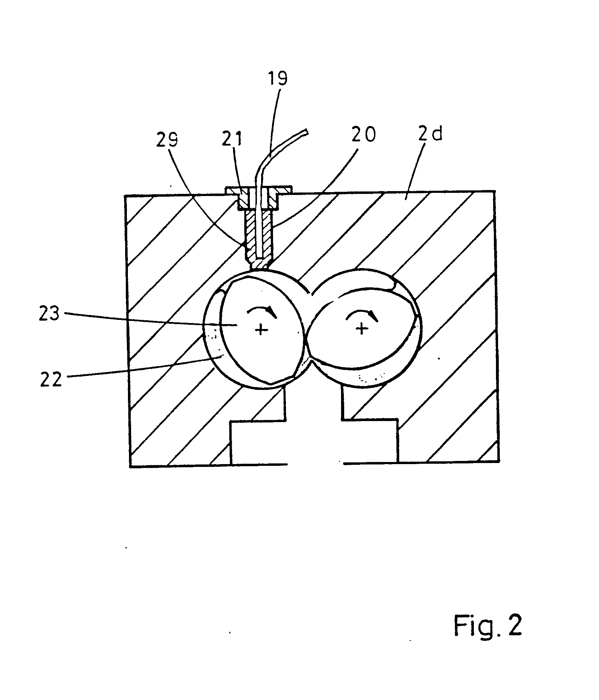

In der Zeichnung ist in Fig. 1 ein Ausführungsbeispiel nach der Erfindung schematisch aufgezeigt. Die Schneckenmaschine kann ein- oder mehrwellig ausgebildet sein. Fig. 2 zeigt die Anordnung der Meßstelle in einer Doppelwellen-Schneckenmaschine im Schnitt entsprechend der Schnittlinie II–II in Fig. 1 für die Einführung einer Meßsonde in die Schneckenmaschine als Verbindungsglied zum Spektrometer.

Die Zeichnung zeigt eine ein- oder mehrwellig ausgebildete mit einem Antriebsmotor 3 und Getriebe 4 verbundene Schneckenmaschine 1, deren Verfahrensstrecke aus mehreren Gehäuseteilen 2a, 2b, 2c, 2d besteht.

Die der Schneckenmaschine 1 aufzugebenden Mischungskomponenten die aus festen Kunststoffteilchen als Grundkomponente, Farbkonzentraten, Füllstoffen sowie Pigmenten in Pulverform bestehen, werden entweder als Vormischung oder einzeln einem Aufgabe-Trichter 5 zugeführt. Im gezeigten Beispiel erfolgt die Zuführung einzeln über Dosiereinrichtungen wie beispielsweise einer Dosierbandwaage 6 einer Differentialwaage 7 und einer Dosierschnecke 8 in den Aufgabetrichter 5 der Schneckenmaschine 1. Sowohl die Dosierwaagen 6 bzw. 7 wie auch die Dosierschnecke 8 weisen jeweils einen Entnahmespeicher 9a, 9b bzw. 10 auf, in welchen die einzelnen Komponenten bevorratet sind.

Die Regeleinrichtungen (Controller) 11 und 12 der Dosierwaagen 6 und 7 zur Regelung der jeweiligen Antriebsmotoren 24, 25 und die Antriebssteuerung (Tyristoreinheit) 13 zur Regelung der Antriebsmotoren 26 der Dosierschnecke 8 sind jeweils über Leitungen 14a, 14b, 14c mit einer programmierbaren Steuer- und Regeleinheit 15 verbunden, die entsprechend einer eingegebenen Rezeptur für die Mischungsbestandteile die Fördergeschwindigkeit der Dosiereinrichtungen steuert. Die Steuer- und Regeleinheit 15 steht über eine Leitung 16 mit einem Auswertegerät 17 und mit einem Spektrometer 18 in Verbindung. Eine lichtdurchlässige Meßsonde 19 ist über eine Bohrung 20 mittels Hülse 21 am Ende der Verfahrensstrecke der Schneckenmaschine bis in den Innenraum 22 des Gehäuseteiles 2d eingeführt. Dies erfolgt mittels eines in der abgestuften Bohrung 20 dicht eingepaßten Glasstopfens 29, der zweiteilig ausgebildet sein kann und in dessen Längsachse die Meßsonde 19 eingeführt ist. Die Meßsonde 19 übermittelt in Verbindung mit dem Spektrometer 18 periodisch ein Lichtspektrum des im Innenraum 22 befindlichen und von den Verarbeitungsschnecken 23 extrudierten Mischgutes. Das hierbei erhaltene Lichtspektrum, das dem Auswertegerät 17 zugeleitet wird, ist ein Maß für die tatsächliche Farbintensität der zu extrudierenden Mischung und dient als Vergleichsmaß für die gewünschte im Auswertegerät 17 gespeicherte Farbintensität. Dieser Vergleich erfolgt im Auswertegerät 17 durch Vergleich der Remissionswerte der Standardmischung mit den ermittelten Remissionswerten der Schmelze in der Schneckenmaschine zur Erlangung eines Regelsignals. Die Remissionswerte der Standardmischung werden hierzu von einem Muster 27 über eine Probenmeßsonde 28 durch das Auswertegerät 17 abgerufen. Die Umsetzung dieses Vergleichs erfolgt dann in der Steuer- und Regeleinheit 15, die bei einer Abweichung von der Standardmischung den Antrieb der Dosiereinrichtungen für die Zuschlagstoffe und die Pigmente in Abänderung der ursprünglich eingegebenen Rezeptur korrigiert.

Das nachfolgende Beispiel soll zur Verdeutlichung des erfindungsgemäßen Verfahrens für die gesteuerte Farbkonzentrat-Zugabe dienen. Unter Farbkonzentraten sind auch Farbstoffkomponenten oder reine Pigmente zu verstehen.

Zur Herstellung einer violetten Epoxy-Polyester-Pulverlackmischung wird der Steuer- und Regeleinheit 15 an Mischungsbestandteilen die folgende Rezeptur eingegeben.

Polyester 40%, Epikote 24%, Kreide 30,6%, rotes Pigment 0,2‰, blaues Pigment 0,1‰, Additiv 5%, Verlaufmittel 0,3%.

Der Probenmeßsonde 28, die mit dem Spektrometer 18 verbunden und auf die Meßsonde 19 abgeglichen ist, wird ein Muster dieser Rezeptur als Fertigmischung vorgelegt, und die hiernach erhaltenen Remissionswerte werden im Auswertegerät 17 als Sollwert gespeichert. Nach Inbetriebnahme der Dosiervorrichtungen 6, 7 und 8 und der Schneckenmaschine 1 und nach Erhalt einer ersten Fertigmischung werden die aktuellen Remissionswerte mittels Meßsonde 19 und Spektrometer 18 gemessen und im Auswertegerät 17 mit den Musterwerten verglichen. Bei einer festgestellten Abweichung wird diese an die Steuer- und Regeleinheit 15 weitergegeben und mittels dieser die Zugabemenge durch Korrektur der Fördergeschwindigkeit der Dosiereinrichtungen für die Farbkonzentrate und/oder Pigmente entsprechend verändert.

In kurzfristigen Abständen erfolgen automatisch weitere Messungen der Remissionswerte, die in gleicher Weise ausgewertet werden, um nachfolgend weitere Korrekturen der Rezeptur zu ermöglichen bis das Extrudat die Remissionswerte des Musters erreicht hat.

**Patentansprüche**

1. Verfahren zur Regelung des Antriebes von Dosiereinrichtungen für die gesteuerte Zugabe von Farbkonzentraten und Zusatzstoffen in den mit einer Grundkomponente dosiert beschickbaren Aufgabetrichter einer Schneckenmaschine zur Aufbereitung einer Fertigmischung nach Mischungsvorgabe, dadurch gekennzeichnet, daß die Fertigmischung in ihrer Farbintensität regelmäßig in kurzen Zeitabständen durch ein mittels einer lichtdurchlässigen, am Austrittsende in den Innenraum der Schneckenmaschine eingeführten Meßsonde verbundenes Spektrometer überprüft und zur Bildung eines periodisch abrufbaren Meßsignals für die gesteuerte Zugabe der Einzelkomponenten in einem mit einer Steuer- und Regeleinheit verbundenen Auswertegerät mit dem Sollwert der von einem Muster einer Standard-Mischung abgeleiteten Farbintensität fortlaufend verglichen wird, wobei diese dem Auswertegerät über eine mit der Meßssonde abgeglichene Proben-Meßsonde zugeführt wird.

2. Vorrichtung zur Durchführung des Verfahrens nach Anspruch 1, mit einer aus mehreren Gehäuseteilen gebildeten Schneckenmaschine (1), deren erstes Gehäuseteil (2 a) mit einem Aufgabetrichter (5) ausgebildet ist, in dessen Öffnung Dosiereinrichtungen zur Einbringung von festen Kunststoffteilchen, Farbkonzentraten und Zusatzstoffen einmünden, einem Gehäuseteil (2 d) für den Austrag der Fertigmischung und einer mit den Antrieben der Dosiereinrichtungen verbundenen Steuer- und Regeleinheit (15), dadurch gekennzeichnet, daß die Steuer- und Regeleinheit (15) über ein Auswertegerät (17) mit einem Spektrometer (18) verbunden ist, dessen lichtdurchlässige Meßsonde (19) einen im Gehäuseteil (2 d) der Schneckenmaschine mittels einer Hülse (21) befestigten Glasstopfen (29) aufweist, der in einer unmittelbar am Austragsende der Schneckenmaschine angeordneten und abgestuften Bohrung (20) dicht eingepaßt den Innenraum (22) mit dem Spektrometer (18) lichtdurchlässig verbindet.

## Claims

1. Method for the regulation of the drive of metering equipments for the controlled addition of colour concentrates and additives into the charging funnel, which is loadable in metered manner by a basic component, of a worm machine for the preparation of a finished mixture according to mixture recipe, characterised thereby, that the finished mixture is checked for colour intensity regularly at short time intervals by a spectrometer connected by means of a measuring probe, which is light-permeable and introduced at the output end into the interior space of the worm machine, and continuously compared in an evaluating device, which is connected with a control and regulating unit, with the target value of the colour intensity derived from a specimen of a standard mixture for the formation of a periodically recallable measurement signal for the controlled addition of the individual components, wherein this target value is fed to the evaluating device by way of a sample measuring probe equalised with the measuring probe.

2. Apparatus for the performance of the method according to claim 1, with a worm machine (1), which is formed of several housing parts and the first housing part (2 a) of which is formed with a charging funnel (5), into the opening of which metering equipments open for the introduction of solid synthetic material particles, colour concentrates and additives, a housing part (2 d) for the output of the finished mixture and a control and regulating unit (15) connected with the drives of the metering equipments, characterised thereby, that the control and regulating unit (15) is connected by way of an evaluating device (17) with a spectrometer (18), the light-permeable measuring probe (19) of which displays a glass plug (29), which is fastened by means of a sleeve (21) in the housing part (2 d) of the worm machine, light-permeably connects the interior space (22) with the spectrometer (18) and which is sealingly fitted in a stepped bore (20) arranged directly at the output end of the worm machine.

## Revendications

1. Procédé de régulation de l'entraînement des dispositifs d'introduction dosée pour l'ajout commandé de concentrés colorants et de produits d'addition dans l'entonnoir d'alimentation, que l'on peut charger, de façon dosée, avec un composant de base, d'une boudineuse pour la préparation d'un mélange fini conforme à un mélange prescrit, procédé caractérisé en ce que l'on contrôle régulièrement, à de brefs intervalles de temps, l'intensité de coloration du mélange fini, au moyen d'un spectromètre relié au moyen d'une sonde translucide de mesure, introduite dans l'espace intérieur de la boudineuse, côté sortie; et en ce que, pour former un signal de mesure, que l'on peut appeler périodiquement, pour l'ajout commandé des différents composants, on compare en continu dans un appareil d'appréciation, relié à une unité de commande et de régulation, cette intensité de coloration à la valeur prescrite de l'intensité de coloration déduite d'un échantillon de mélange type, cette dernière intensité étant amenée à l'appareil d'appréciation par l'intermédiaire d'une sonde de mesure d'échantillon alignée sur la sonde de mesure.

2. Dispositif pour l'exécution du procédé selon la revendication 1, comportant une boudineuse (1) qui est formée de plusieurs parties de carter et dont la première partie de carter (2 a) est prévue avec un entonnoir (5) d'alimentation, dans l'ouverture duquel débouchent des dispositifs d'introduction dosée pour amener des particules de matière plastique solide, des concentrés colorants et des produits d'addition, comportant aussi une partie de carter (2 d) pour la sortie du mélange fini ainsi qu'une unité (15) de commande et de régulation reliée aux mécanismes d'entraînement des dispositifs d'introduction dosée, dispositif caractérisé en ce que l'unité (15) de commande et de régulation est reliée, par l'intermédiaire d'un appareil (17) d'appréciation, à un spectromètre (18) dont la sonde (19) translucide de mesure présente un bouchon de verre (29) qui est fixé dans la partie (2 d) du carter de la boudineuse au moyen d'une douille (21) et qui, ajusté serré, dans un alésage (20) immédiatement disposé côté sortie de la boudineuse et étagé, relie, de façon transparente, l'espace intérieur (22) au spectromètre (18).

Fig.1

Fig. 2